# FASCICULE DE BREVET EUROPEEN

(11) **EP 1 178 186 B1**
(45) Date de publication et mention de la délivrance du brevet: **21.09.2005**
(21) Numéro de dépôt: 01401887.3
(22) Date de dépôt: 13.07.2001
(51) Int. Cl.: F01N 3/023, F02D 41/40, F01N 3/035, F02D 41/02

(54) **Système d'aide à la régénération d'un filtre à particules intégré dans une ligne d'échappement d'un moteur Diesel de véhicule automobile**
Vorrichtung zur Regenerierung eines Partikelfilters in einer selbstgezündeten Brennkraftmaschine
System to regenerate an exhaust particle filter in a diesel engine

(30) Priorité: 03.08.2000 FR 0010275
(43) Date de publication de la demande: 06.02.2002
(73) Titulaire: Peugeot Citroen Automobiles SA, 92200 Neuilly sur Seine (FR)
(72) Inventeur: Agliany, Yvan, 75005 Paris (FR)
(74) Mandataire: Habasque, Etienne J. Jean-François

(56) Documents cités:
- FR-A- 2 749 351
- FR-A- 2 774 421
- US-A- 4 685 290
- US-A- 4 881 369
- LANGKABEL G I: "LA PLUS GRANDE INVENTION DEPUIS LE MOTEUR DIESEL" REVUE AUTOMOBILE,HALLWAG S.A. BERNE,CH, vol. 94, no. 19, 6 mai 1999 (1999-05-06), page 21 XP000825692 ISSN: 0035-0761
- PATENT ABSTRACTS OF JAPAN vol. 2000, no. 03, 30 mars 2000 (2000-03-30) & JP 11 336530 A (NISSAN MOTOR CO LTD), 7 décembre 1999 (1999-12-07)
- PATENT ABSTRACTS OF JAPAN vol. 1996, no. 02, 29 février 1996 (1996-02-29) -& JP 07 259533 A (NIPPON SOKEN INC), 9 octobre 1995 (1995-10-09)
- "A METHOD FOR ESTIMATING AND CONTROLLING THE OXIDATION STATE OF A CATALYTIC CONVERTER" RESEARCH DISCLOSURE,GB,INDUSTRIAL OPPORTUNITIES LTD. HAVANT, no. 409, mai 1998 (1998-05), page 549 XP000824684 ISSN: 0374-4353

## Description

La présente invention concerne un système d'aide à la régénération d'un filtre à particules intégré dans une ligne d'échappement d'un moteur Diesel de véhicule automobile.

On sait que la réduction des émissions polluantes liées au fonctionnement des moteurs des véhicules automobiles et en particulier des moteurs Diesel est un souci permanent des constructeurs.

Différents systèmes ont déjà été développés dans l'état de la technique pour réduire le niveau de ces émissions polluantes en particulier en utilisant un filtre à particules intégré dans la ligne d'échappement.

On pourra par exemple se rapporter au document LANGKABEL G.I : LA PLUS GRANDE INVENTION DEPUIS LE MOTEUR DIESEL, REVUE AUTOMOBILE, CH, HALLWAG S.A. BERNE, volume 94, n° 19,6 mai 1999 (1999-05-06), page 21, qui décrit un système conforme au préambule de la revendication 1 et au document JP-A-1133 6530 qui décrit un système d'aide à la régénération d'un tel filtre à particules.

Cependant, la gestion du fonctionnement de celui-ci et en particulier la gestion de sa régénération génère encore des difficultés.

Le but de l'invention est donc de les résoudre.

A cet effet, l'invention a pour objet un système d'aide à la régénération d'un filtre à particules intégré dans une ligne d'échappement d'un moteur Diesel de véhicule automobile, comportant différents organes associés au moteur, parmi lesquels :
- des moyens d'admission d'air dans le moteur,
- des moyens de recyclage de gaz d'échappement du moteur en entrée de celui-ci,
- un turbocompresseur,
- un catalyseur d'oxydation disposé en amont du filtre à particules dans la ligne d'échappement ;
- un système d'alimentation en carburant des cylindres du moteur, comportant des injecteurs à commande électrique, associés à ces cylindres,
- des moyens pour abaisser la température de combustion des particules piégées dans le filtre,
- des moyens d'acquisition d'informations relatives à différents paramètres de fonctionnement du moteur et des organes associés à celui-ci, caractérisé en ce qu'il comporte en outre :
   - des moyens de contrôle du fonctionnement des moyens d'admission, des moyens de recyclage, du turbocompresseur et/ou du système d'alimentation pour contrôler le fonctionnement du moteur, ces moyens étant en outre adaptés pour déclencher une phase de régénération du filtre à particules par combustion des particules piégées dans celui-ci en enclenchant une phase d'injections multiples de carburant dans les cylindres du moteur pendant leur phase de détente, et en ce que les moyens de contrôle sont associés à des moyens de détermination du niveau d'activité du catalyseur par un calculateur des moyens de contrôle à partir d'informations de température délivrées par des capteurs placés en amont du catalyseur et entre ce catalyseur et le filtre à particules respectivement, et d'une modélisation numérique du catalyseur, pour commander en continu le phasage et/ou la quantité de carburant injecté lors des injections multiples, afin d'adapter de façon continue la quantité d'hydrocarbures produite par le moteur au niveau d'activité du catalyseur et optimiser le fonctionnement de celui-ci.

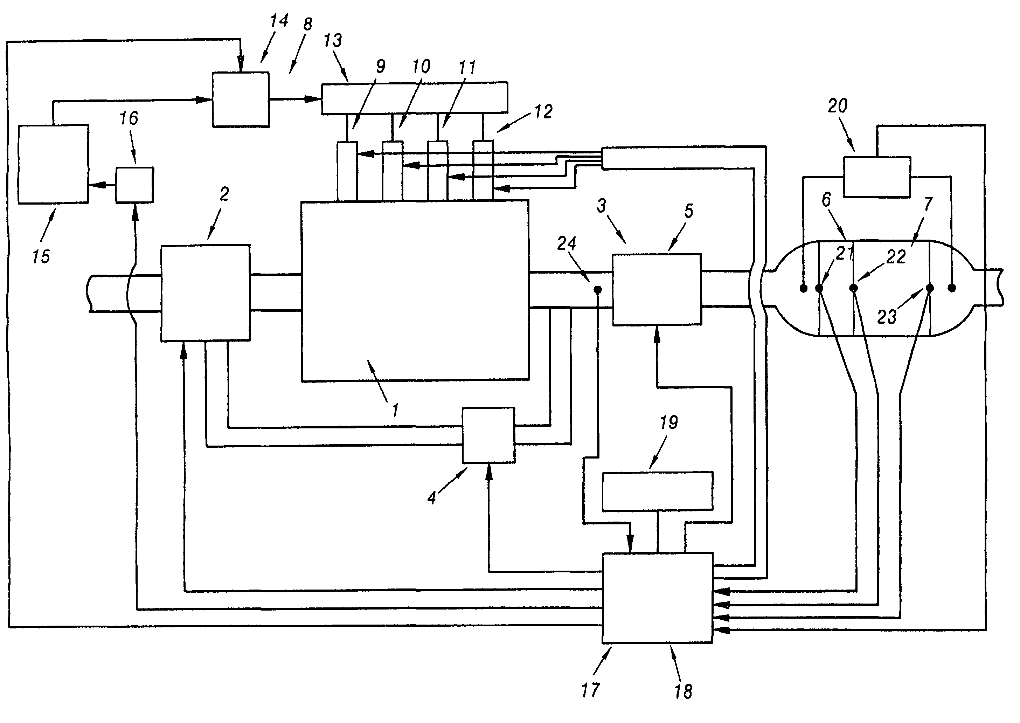

L'invention sera mieux comprise à la lecture de la description qui va suivre, donnée uniquement à titre d'exemple et faite en se référant au dessin annexé qui représente un schéma synoptique illustrant un moteur Diesel de véhicule automobile, et les différents organes associés à celui-ci.

On a en effet représenté sur cette figure, un moteur Diesel de véhicule automobile qui est désigné par la référence générale 1.

Ce moteur Diesel est associé à des moyens d'admission d'air en entrée de celui-ci, qui sont désignés par la référence générale 2.

En sortie, ce moteur est associé à une ligne d'échappement qui est désignée par la référence générale 3.

Des moyens de recyclage de gaz d'échappement du moteur en entrée de celui-ci sont également prévus et sont désignés par la référence générale 4.

Ces moyens sont alors interposés par exemple entre la sortie du moteur et les moyens 2 d'admission d'air dans celui-ci.

La ligne d'échappement peut également être associée à un turbocompresseur désigné par la référence générale 5 et plus particulièrement à la portion de turbine de celui-ci, de façon classique.

Enfin, la ligne d'échappement comporte un catalyseur d'oxydation désigné par la référence générale 6, disposé en amont d'un filtre à particules désigné par la référence générale 7, disposé dans la ligne d 'échappement.

Le moteur est également associé à un système d'alimentation par exemple commune en carburant des cylindres de celui-ci. Ce système est désigné par la référence générale 8 sur cette figure et comporte par exemple des injecteurs à haute pression à commande électrique associés à ces cylindres.

Bien entendu, d'autres systèmes d'alimentation à haute pression comme par exemple par injecteurs-pompes peuvent être envisagés.

Dans l'exemple de réalisation représenté, le moteur est un moteur à quatre cylindres et comporte donc quatre injecteurs à commande électrique, respectivement 9,10,11 et 12.

Ces différents injecteurs sont associés par exemple à une rampe d'alimentation commune en carburant désignée par la référence générale 13 et reliée à des moyens d'alimentation en carburant désignés par la référence générale 14, comprenant par exemple une pompe à haute pression.

Ces moyens d'alimentation sont reliés à un réservoir de carburant désigné par la référence générale 15 et par exemple à des moyens d'ajout à ce carburant d'un additif destiné à se déposer sur le filtre à particules pour abaisser la température de combustion des particules piégées dans celui-ci.

En fait, cet additif peut par exemple être contenu dans un réservoir auxiliaire désigné par la référence générale 16 associé au réservoir de carburant 15 pour permettre l'injection d'une certaine quantité de cet additif dans le carburant.

D'autres moyens pour abaisser cette température peuvent également être utilisés comme par exemple un filtre à particules catalysé.

Enfin, ce moteur et les différents organes qui viennent d'être décrits sont également associés à des moyens de contrôle de leur fonctionnement désignés par la référence générale 17 sur cette figure, comprenant par exemple tout calculateur approprié 18 associé à des moyens de stockage d'informations 19, et raccordé en entrée à différents moyens d'acquisition d'informations relatives à différents paramètres de fonctionnement de ce moteur et de ces organes, ce calculateur étant alors adapté pour contrôler le fonctionnement des moyens d'admission, des moyens de recyclage, du turbocompresseur et/ou du système d'alimentation pour contrôler le fonctionnement du moteur et notamment le couple engendré par celui-ci en fonction des conditions de roulage du véhicule de façon classique.

C'est ainsi par exemple que ce calculateur est relié à un capteur de pression différentielle 20 aux bornes du catalyseur et du filtre à particules, respectivement 6 et 7, à des capteurs de température 21,22 et 23, respectivement en amont du catalyseur, entre ce catalyseur et le filtre à particules et en aval de ce filtre à particules dans la ligne d'échappement.

Le capteur de pression 20 peut également être relié aux bornes du filtre seul.

Le calculateur peut également recevoir une information de teneur en oxygène des gaz d'échappement à partir d'une sonde Lambda λ désignée par la référence générale 24 sur cette figure, intégrée dans la ligne d'échappement.

En sortie, ce calculateur est adapté pour piloter les moyens d'admission d'air, les moyens de recyclage de gaz d'échappement, le turbocompresseur, les moyens d'ajout au carburant de l'additif, les moyens d'alimentation en carburant de la rampe commune et les différents injecteurs associés aux cylindres du moteur.

En particulier, ce calculateur est adapté pour déclencher une phase de régénération du filtre à particules par combustion des particules piégées dans celui-ci en enclenchant une phase d'injections multiples de carburant dans les cylindres du moteur pendant leur phase de détente.

Les particules émises par le moteur au cours de son fonctionnement sont en effet piégées dans le filtre à particules. Il convient alors de régénérer celui-ci régulièrement par combustion de ces particules.

Les moyens de contrôle 17 sont également associés à des moyens de détermination de l'état d'activation du catalyseur d'oxydation 6 formés par le calculateur 18 de ceux-ci, pour, lors de la régénération du filtre, adapter de façon continue les conditions de déroulement de la phase d'injections multiples de carburant dans les cylindres du moteur afin de tenir compte de l'état d'activation du catalyseur.

Ceci est réalisé en commandant le phasage et/ou la quantité de carburant injecté lors des injections multiples pour adapter de façon continue la quantité d'hydrocarbures produite lors de cette phase par le moteur, au niveau d'activité du catalyseur et optimiser le fonctionnement de celui-ci, par pilotage du système d'alimentation en carburant 8.

Une surveillance en continu du niveau d'activité du catalyseur permet donc de commander en continu le phasage et/ou la quantité de carburant injecté pour optimiser en continu le fonctionnement du catalyseur et donc la température au sein de ce catalyseur en évitant toute dégradation de celui-ci, du filtre à particules ou encore du moteur et toute production de fumées ou d'odeurs.

L'état d'activation du catalyseur 6 peut être déterminé par le calculateur 18 par exemple à partir des informations délivrées par les capteurs de température 21 en entrée du catalyseur et 22 en sortie de celui-ci, de façon classique.

De préférence, le calculateur 18 est associé à une modélisation numérique intégrée du catalyseur pour connaître son état d'activité à partir des informations fournies par les capteurs.

Bien entendu, d'autres moyens peuvent être utilisés comme par exemple des moyens d'analyse de la composition chimique des gaz d'échappement en entrée et en sortie de ce catalyseur.

## Revendications

1. Système d'aide à la régénération d'un filtre à particules intégré dans une ligne d'échappement d'un moteur Diesel de véhicule automobile, comportant différents organes associés au moteur, parmi lesquels :
- des moyens (2) d'admission d'air dans le moteur,
- des moyens (4) de recyclage de gaz d'échappement du moteur en entrée de celui-ci,
- un turbocompresseur (5),
- un catalyseur d'oxydation (6) disposé en amont du filtre à particules (7) dans la ligne d'échappement ;
- un système (8) d'alimentation en carburant des cylindres du moteur, comportant des injecteurs à commande électrique (9,10,11,12), associés à ces cylindres,
- des moyens (16) pour abaisser la température de combustion des particules piégées dans le filtre,
- des moyens (20,21,22,23,24) d'acquisition d'informations relatives à différents paramètres de fonctionnement du moteur et des organes associés à celui-ci, **caractérisé en ce qu'**il comporte en outre :
- des moyens (17) de contrôle du fonctionnement des moyens d'admission, des moyens de recyclage, du turbocompresseur et/ou du système d'alimentation pour contrôler le fonctionnement du moteur, ces moyens étant en outre adaptés pour déclencher une phase de régénération du filtre à particules par combustion des particules piégées dans celui-ci en enclenchant une phase d'injections multiples de carburant dans les cylindres du moteur pendant leur phase de détente, et **en ce que** les moyens de contrôle (17) sont associés à des moyens (18,21,22) de détermination du niveau d'activité du catalyseur (6) par un calculateur (18) des moyens de contrôle (17) à partir d'informations de température délivrées par des capteurs (21,22) placés en amont du catalyseur et entre ce catalyseur (6) et le filtre à particules (7) respectivement, et d'une modélisation numérique du catalyseur, pour commander en continu le phasage et/ou la quantité de carburant injecté lors des injections multiples, afin d'adapter de façon continue la quantité d'hydrocarbures produite par le moteur au niveau d'activité du catalyseur et optimiser le fonctionnement de celui-ci.

2. Système selon la revendication 1, **caractérisé en ce que** le système d'alimentation est un système d'alimentation à rampe commune à haute pression des cylindres du moteur.

3. Système selon la revendication 1, **caractérisé en ce que** le système d'alimentation comporte des injecteurs-pompes.

4. Système selon l'une quelconque des revendications précédentes, **caractérisé en ce que** les moyens pour abaisser la température de combustion des particules comprennent des moyens d'ajout au carburant d'un additif destiné à se déposer sur le filtre à particules.

5. Système selon l'une quelconque des revendications 1 à 3, **caractérisé en ce que** le filtre à particules est un filtre catalysé.

## Patentansprüche

1. Hilfssystem zur Regeneration eines Teilchenfilters, der in eine Auspuffleitung eines Dieselmotors eines Kraftfahrzeugs integriert ist, mit verschiedenen mit dem Motor verbundenen Einrichtungen, unter denen sich folgende befinden:
- Mittel (2) zum Einlassen von Luft in den Motor,
- Mittel (4) zur Rückführung von Abgas des Motors zum Eingang von diesem,
- ein Turbolader (5),
- ein Oxidationskatalysator (6), der vor dem Teilchenfilter (7) in der Auspuffleitung angeordnet ist;
- ein System (8) zur Versorgung der Zylinder des Motors mit Kraftstoff, welches Einspritzdüsen (9, 10, 11, 12) mit elektrischer Steuerung, die mit diesen Zylindern verbunden sind, umfaßt;
- Mittel (16) zum Senken der Verbrennungstemperatur der im Filter aufgefangenen Teilchen,
- Mittel (20, 21, 22, 23, 24) zur Erfassung von Informationen bezüglich verschiedener Betriebsparameter des Motors und der mit diesem verbundenen Einrichtungen, **dadurch gekennzeichnet, daß** es außerdem umfaßt:
- Mittel (17) zur Steuerung der Funktion der Einlaßmittel, der Rückführungsmittel, des Turboladers und/oder des Versorgungssystems zum Steuern des Betriebs des Motors, wobei diese Mittel außerdem dazu ausgelegt sind, eine Regenerationsphase des Teilchenfilters durch Verbrennung der in diesem aufgefangenen Teilchen auszulösen, indem eine Phase mehrerer Einspritzungen von Kraftstoff in die Zylinder des Motors während ihrer Entspannungsphase ausgelöst wird, und daß die Steuermittel (17) mit Mitteln (18, 21, 22) zur Bestimmung des Aktivitätsniveaus des Katalysators (6) durch einen Rechner (18) der Steuermittel (17) ausgehend von Informationen der Temperatur, die von Sensoren (21, 22) geliefert werden, die vor dem Katalysator bzw. zwischen diesem Katalysator (6) und dem Teilchenfilter (7) angeordnet sind, und einer numerischen Modellbeschreibung des Katalysators verbunden sind, um stets die Phasensynchronisation und/oder die Menge an bei den mehreren Einspritzungen eingespritztem Kraftstoff zu steuern, um stets die Menge an Kohlenwasserstoffen, die vom Motor erzeugt wird, an das Aktivitätsniveau des Katalysators anzupassen und die Funktion von diesem zu optimieren.

2. System nach Anspruch 1, **dadurch gekennzeichnet, daß** das Versorgungssystem ein Hochdruck-Versorgungssystem mit gemeinsamem Verteilerstück der Zylinder des Motors ist.

3. System nach Anspruch 1, **dadurch gekennzeichnet, daß** das Versorgungssystem Pumpeneinspritzdüsen umfaßt.

4. System nach einem der vorangehenden Ansprüche, **dadurch gekennzeichnet, daß** die Mittel zum Senken der Verbrennungstemperatur der Teilchen Mittel zum Hinzufügen eines Additivs zum Kraftstoff umfassen, welches sich auf dem Teilchenfilter abscheiden soll.

5. System nach einem der Ansprüche 1 bis 3, **dadurch gekennzeichnet, dass** der Teilchenfilter ein katalysierter Filter ist.

## Claims

1. System for assisting regeneration of a particle filter integrated into a motor vehicle diesel engine exhaust line, the system including various units associated with the engine, including:
- means (2) for admitting air into the engine,
- means (4) for recycling exhaust gases of the engine to the inlet thereof,
- a turbocompressor (5),
- an oxidation catalytic converter (6) in the exhaust line on the upstream side of the particle filter (7),
- a system (8) for feeding fuel to the cylinders of the engine, including electrical fuel injectors (9, 10, 11, 12) associated with those cylinders,
- means (16) for reducing the combustion temperature of particles trapped in the filter,
- means (20, 21, 22, 23, 24) for acquiring information relating to various operating parameters of the engine and the units associated therewith, which system is **characterised in that** it further includes means (17) for monitoring the operation of the air admission means, the recycling means, the turbocompressor and/or the fuel feeding system to monitor the operation of the engine, these means being further adapted to trigger a phase of regeneration of the particle filter by combustion of particles trapped therein by triggering a phase of multiple injection of fuel into the cylinders of the engine during their expansion phase, and **in that** the monitoring means (17) are associated with means (18, 21, 22) for determining the level of activity of the catalytic converter (6) by means of a computer (18) of the monitoring means (17) and from temperature information delivered by sensors (21, 22) on the upstream side of the catalytic converter and between the catalytic converter (6) and the particle filter (7), respectively, and with a digital model of the catalytic converter, for continuous control of the phasing of injection and/or of the quantity of fuel injected during multiple injections, in order continuously to adapt the quantity of hydrocarbons produced by the engine to the level of activity of the catalytic converter and to optimise the operation thereof.

2. System according to claim 1, **characterised in that** the fuel feeding system is an engine cylinder fuel feeding system with a common high-pressure manifold.

3. System according to claim 1, **characterised in that that** the fuel feeding system includes pump-injectors.

4. System according to any one of the preceding claims, **characterised in that** the means for reducing the combustion temperature of the particles comprise means for adding to the fuel an additive adapted to be deposited on the particle filter.

5. System according to any one of claims 1 to 3, **characterised in that** the particle filter is a catalytic filter.
